**Europäisches Patentamt**

**European Patent Office**

**Office européen des brevets**

(19)

(11) Numéro de publication : **0 591 301 B1**

# (12) FASCICULE DE BREVET EUROPEEN

(45) Date de publication du fascicule du brevet :
**22.02.95 Bulletin 95/08**

(51) Int. Cl.$^6$ : **H04B 10/02, H04N 7/22**

(21) Numéro de dépôt : **92912813.0**

(22) Date de dépôt : **19.06.92**

(86) Numéro de dépôt international :
**PCT/FR92/00564**

(87) Numéro de publication internationale :
**WO 93/00755 07.01.93 Gazette 93/02**

(54) DISPOSITIF DE MODULATION ELECTRO-OPTIQUE INTEGRE.

(30) Priorité : **27.06.91 FR 9108014**

(43) Date de publication de la demande :
**13.04.94 Bulletin 94/15**

(45) Mention de la délivrance du brevet :
**22.02.95 Bulletin 95/08**

(84) Etats contractants désignés :
**DE GB**

(56) Documents cités :
**WO-A-85/01123**
**US-A- 4 900 115**
**IEEE PHOTONICS TECHNOLOGY LETTERS**
**vol. 3, Février 1991, NEW YORK US pages 144
-146; LIU ET AL: 'In Search of a Linear Electrooptic Amplitude Modulator'**

(56) Documents cités :
**NTZ NACHRICHTECHNISCHE ZEITSCHRIFT.
vol. 42, no. 2, Février 1989, BERLIN DEpages
68 - 71; POHLMANN ET AL: 'Schnelle optische
Schalter in LiNbO3'**

(73) Titulaire : **THOMSON-CSF**
**173, Boulevard Haussmann**
**F-75008 Paris (FR)**

(72) Inventeur : **RIVIERE, Luc**
**Thomson-CSF SCPI**
**F-92045 Paris-La Défense Cédex 67 (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

EP 0 591 301 B1

## Description

La présente invention se rapporte aux dispositifs qui permettent de moduler un signal optique à partir d'un signal électrique. De tels dispositifs sont le plus souvent intégrés à la surface d'un substrat constitué d'un matériau dont les propriétés optiques changent sous l'effet d'un champ électrique qui lui est appliqué. Ces dispositifs permettent notamment de moduler un signal lumineux pour permettre de transmettre des signaux analogiques, par exemple des signaux de télévision modulée en amplitude à bandes latérales réduites (MABLR), sur des réseaux de télévision câblés mettant en oeuvre des fibres optiques. Afin d'améliorer la linéarisation de la réponse électrooptique d'un modulateur optique intégré, la demanderesse a déposé une demande de brevet français publiée sous le N° 2 670 589. Cette invention est basée sur la modulation simultanée de deux zones distinctes d'un coupleur à jonction Y. La modulation d'une zone de type "coupleur" a pour inconvénient d'être peu efficace car elle nécessite une structure d'électrode à deux conducteurs et donc un champ électrique vertical (sur $LiNbO_3$ coupe Z).

Des structures similaires sont également connues de deux articles, l'un paru dans IEEE Photonics Technology Letters, vol. 3, février 1991, New York US, pages 144 à 146, et l'autre paru dans NTZ Nachrichttechnische Zeitschrift, vol. 42, N° 2, Février 1989, Berlin DE, pages 68 à 71. Ces structures présentent les mêmes inconvénients.

L'objet de la présente invention est d'améliorer encore la linéarisation de la réponse électrooptique d'un modulateur optique intégré, et également de réduire la tension de commande nécessaire pour la modulation. Pour cela la présente invention est basée sur la modulation simultanée de deux zones différentes d'un interféromètre, c'est-à-dire de deux zones pour lesquelles les guides sont suffisamment éloignés. Ceci permet l'utilisation d'une structure à trois électrodes, plus efficace d'un point de vue électronique, et donc une tension de commande réduite. Cette structure est compatible avec une coupe X sur niobate de lithium $LiNbO_3$ et donne de surcroît plusieurs avantages inhérents à cette coupe, et notamment une sensibilité moindre à la température et une possibilité d'intégration d'un polariseur permettant un fonctionnement monomode, monopolarisation.

L'invention concerne plus particulièrement un dispositif de modulation électrooptique du type comprenant sur un substrat électrooptique:

- une première section 1 comprenant une jonction en Y destinée à recevoir le signal optique à moduler et à le diviser en deux parties égales.
- une première zone de modulation 2 d'une longueur $L_1$ comprenant deux guides optiques 104, 105 parallèles pour recevoir les deux parties du signal optique sortant de la première section, lesdits guides 104, 105 étant suffisamment éloignés pour empêcher le couplage optique entre eux, ladite zone comprenant également trois électrodes 106, 107, 108 s'étendant sur le substrat le long des guides pour appliquer un champ électrique de modulation en fonction d'un signal électrique de modulation d'amplitude $V_1$ appliqué auxdites électrodes 106, 107, 108.

- une troisième section 3 formant coupleur dans laquelle les guides optiques 110, 111 se prolongent en restant parallèles entre eux sur une longueur $L_2$ et déterminant une longueur de couplage $l_{c2}$, avec $Y = \dfrac{L_2}{l_{c2}}$.

- une section 6 pour séparer les guides optiques 115, 116 et délivrer deux signaux optiques $P_R$, $P_S$ modulés de façon complémentaire ; ce dispositif étant caractérisé en ce que la troisième section n'est pas soumise à modulation, et qu'il comprend en outre :

- une deuxième zone de modulation 4 d'une longueur $L_3$ comprenant deux guides optiques parallèles 112, 113 pour recevoir les deux parties du signal optique sortant de la troisième section 3, lesdits guides 112, 113 étant suffisamment éloignés pour empêcher le couplage optique entre eux, ladite zone comprenant également trois électrodes 106', 107', 108' s'étendant sur le substrat le long des guides pour appliquer un champ électrique de modulation en fonction d'un signal électrique de modulation d'amplitude $V_2$ appliqué auxdites électrodes ; et

- une cinquième section 5 formant coupleur dans laquelle les guides optiques se prolongent en restant parallèles et couplés entre eux sur une longueur $L_4$ en déterminant une longueur de couplage $l_{c4}$, avec $Y' = \dfrac{L_4}{L_{c4}}$, cette cinquième section 5 n'étant pas soumise à modulation.

D'autres particularités et avantages de l'invention apparaîtront de façon plus complète dans la description qui suit, faisant référence à titre d'exemple non limitatif à un schéma en plan d'un modulateur selon l'invention :

- la figure 1 représente une vue schématique d'un premier exemple de réalisation ;
- la figure 2 représente la courbe des valeurs $\alpha$ en fonction du paramètre Y ;
- la figure 3 représente la courbe des valeurs $\beta$ en fonction du paramètre Y ;
- la figure 4 représente les courbes de réponse du modulateur selon l'invention ;
- les figures 5 à 7 représentent des vues en coupe transversale d'exemples de réalisation de la section de couplage du modulateur selon l'invention ;
- les figures 8 à 10 représentent des schémas en plan de variantes de modulateurs selon l'invention.

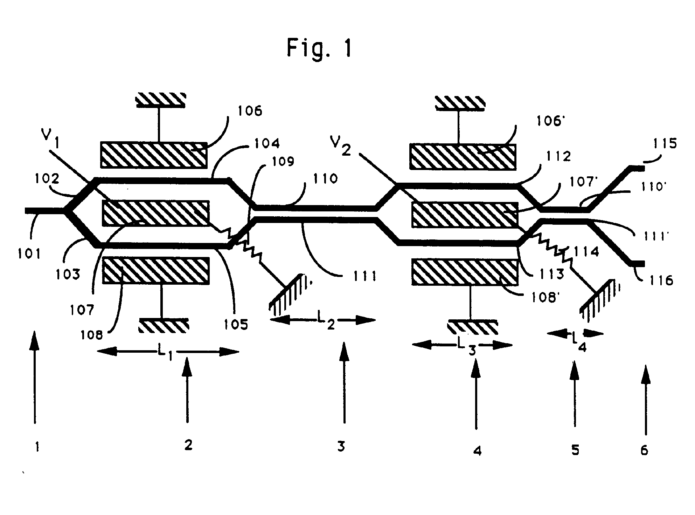

Dans l'exemple de réalisation représenté sur la figure 1, le coupleur selon l'invention est formé de six sections 1 à 6.

La première section 1 comprend une jonction en Y de type connu, dans laquelle le signal lumineux arrivant par un guide d'entrée 101 est divisé en deux parties sensiblement égales par deux bras 102 et 103 qui s'écartent du guide 101.

La deuxième section (2), d'une longueur L1, comprend deux guides (104, 105) s'étendant parallèlement entre eux, suffisamment écartés pour éviter le couplage optique par le biais de l'onde évanescente. Cette deuxième section (2) comprend par ailleurs une structure à trois électrodes (106, 107, 108) pour la modulation électrooptique des deux guides (104, 105) en fonction d'un signal électrique $V_1$ appliqué à ladite structure. Les électrodes extérieures (106 et 108) sont reliées à la masse, alors que l'électrode centrale (107) est reliée d'un côté à une source de modulation qui lui applique un signal électrique $V_1$ et de l'autre à la masse par une résistance (109), elle même reliée à la masse. La polarisation avec l'électrode centrale présente l'avantage de nécessiter une tension de commutation inférieure à celle nécessaire pour les solutions à deux électrodes qui utilisent la composante verticale du champ électrique, moins efficace que la composante horizontale utilisée ici.

La représentation du système d'alimentation des électrodes est illustrée sur la figure 1, de façon schématique.

Les guides (104, 105) s'étendent ensuite à travers la section (3) sur une longueur $L_2$. Les guides (110 et 111) sont écartés d'une distance $G_1$ suffisamment réduite pour permettre le couplage entre lesdits guides par le biais de l'onde évanescente. Cette zone est caractérisée par un paramètre $Y = \dfrac{L_2}{l_{c2}}$ où:

- $L_2$ est la longueur physique du coupleur et,
- $l_{c2}$ est la longueur du couplage, c'est-à-dire la longueur pour laquelle toute la lumière est transférée d'un guide à l'autre. La longueur de couplage est fixée par construction par l'écartement entre les deux guides optiques. Le paramètre Y est donc fixé par construction, mais peut également être ajusté selon une variante décrite ultérieurement. Cette zone (3) de couplage n'est pas soumise à modulation.

Les guides d'onde (110, 111) s'écartent ensuite à nouveau, au niveau de la section (4) pour présenter deux branches (112, 113) suffisamment éloignées pour éviter tout couplage optique. Une structure à trois électrodes (106', 107', 108') permet la modulation en fonction d'un signal électrique d'amplitude $V_2$ appliqué à un côté de l'électrode centrale (107') dont l'autre extrémité est reliée à la masse via une résistance (114) . Le fonctionnement de cette section (4) est similaire à celui de la section (2).

La cinquième zone (5) est constituée d'un coupleur semblable à celui constituant la troisième section (3) et d'une caractéristique $Y' = \dfrac{L_4}{l_{c4}}$ où :

- $L_4$ est la longueur physique du coupleur et ;
- $l_{c4}$ est la longueur du couplage de ce coupleur.

Le paramètre Y' est fixé, comme le paramètre Y, par construction ou par ajustage électrique.

Ensuite dans la section (6), les deux guides s'éloignent pour que l'interaction entre eux cesse. Ils arrivent alors sur des guides de sortie (115, 116) qui délivrent respectivement les signaux optiques modulés $P_R$ et $P_S$.

Si l'on définit :

$\alpha = \dfrac{V_2 L_3}{V_1 L_1}$, $\alpha$ désignant le coefficient de proportionnalité entre les tensions appliquées sur les deux zones de modulation, pondéré par le rapport des longueurs.

$\beta = \dfrac{Y'}{Y} = \dfrac{L_4}{L_2} \times \dfrac{l_{c2}}{l_{c4}}$, $\beta$ étant le coefficient de proportionnalité du couplage entre les deux zones de couplage, a priori fixé par construction, mais éventuellement ajustable électriquement.

On constate que pour un choix approprié des valeurs de $\alpha$, $\beta$, Y, on obtient une réponse électrooptique linéarisée en ce sens que toutes les distorsions d'ordre pair sont nulles car le dispositif est autobiaisé, et la distorsion d'ordre 3 est également annulée.

L'annulation des distorsions d'ordre 3 est obtenue lorsque :

$$\tan(\pi\beta Y) = -\frac{\sin(\pi Y)}{(3\alpha^2 + 1)\cos(\pi Y) + \alpha(\alpha^2 + 3)}$$

Afin de moduler 100 % de la puissance optique, une autre relation entre les paramètres $\alpha$, $\beta$, et Y, doit être vérifiée, relation qui n'a pas été déterminée de façon analytique, mais qui a été obtenue de façon numérique : les solutions peuvent être classées en deux groupes:

Les solutions du type "alterné", pour lesquelles les deux sections de modulation (2, 4) sont soumises à des signaux de modulation $V_1$, $V_2$ de signaux opposés. Dans ce cas, $\alpha$ est négatif. Elles nécessitent donc une inversion préalable du signal de modulation , ce qui peut être obtenu, par exemple, par un inverseur électronique placé devant l'une des deux zones de modulation.

Ces solutions de type alterné, sont obtenues lorsque :

$n \leq Y \leq n + 0,5$      avec n entier $\geq 0$

Des solutions de type "uniforme", pour lesquelles les deux sections sont soumises à un signal de modulation de même signe, sont obtenues lorsque :

$$n+0,5 \leqq Y \leqq n + 1 \qquad \text{avec } n \text{ entier} \geqq 0$$

Dans ce qui suit, seules les solutions du type "uniforme" seront décrites, les solutions du type "alterné", pouvant être décrites à partir des relations :

$$Y_a = 1-Y_u$$
$$Y'_a = 1-Y'_u \text{ c'est-à-dire } \beta_a Y_a = 1 - \beta_u Y_u$$
$$\alpha_a = -\alpha_u$$

où $Y_u$, $Y'_u$ et $\beta_u$, $\alpha_u$ décrivent les solutions uniformes étudiées et $Y_a$, $Y'_a$ et $\beta_a$, $\alpha_a$ sont les paramètres de la solution alternée associée.

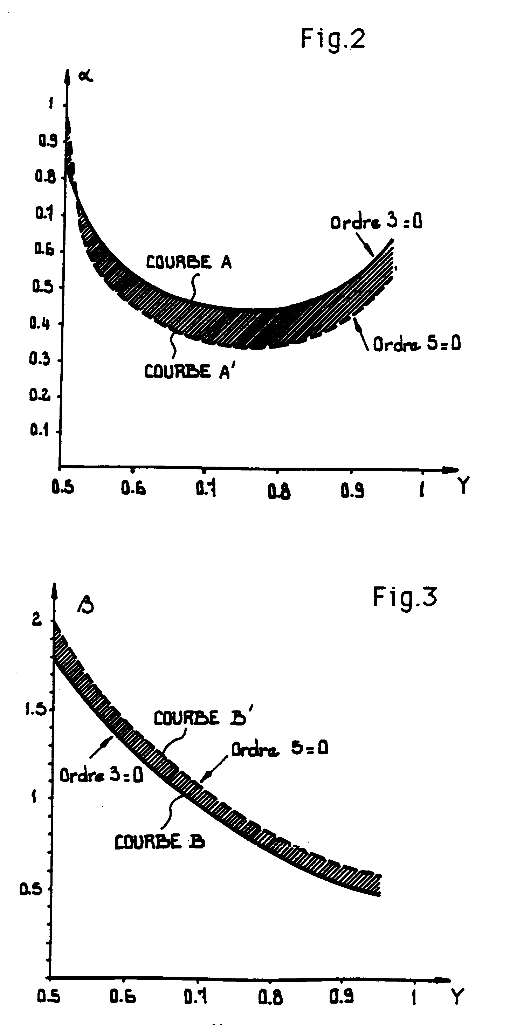

Les figures 2 et 3 représentent la valeur des paramètres respectivement $\alpha$ et $\beta$ en fonction du paramètre Y pour la définition d'un ensemble de solutions linéarisées. Les valeurs des courbes A et A' correspondant au paramètre $\alpha$ permettent obtenir simultanément l'annulation des distorsions respectivement d'ordre 3 (courbe A) et d'ordre 5 (courbe A') et un taux de modulation de 100 % de la puissance optique.

Les valeurs de $\beta$ indiquées en figure 3 en courbe B et B' correspondent aux valeurs de base pour vérifier ces conditions, et notamment l'annulation des distorsions respectivement d'ordre 3 (courbe B) et d'ordre 5 (courbe B'). Il existe une série de valeurs de $\beta$ vérifiant également ces conditions, déduites de la solution décrite par la relation :

$$\beta_l = \frac{n}{Y} + \beta \text{ avec } n \text{ entier} \geqq 0 \text{ où:}$$

- $\beta_l$ désignant les autres valeurs possibles obtenues sur la base de la valeur $\beta$
- $\beta$ désigne les valeurs déterminées graphiquement à la figure 3.

Le choix d'une solution particulière de cet ensemble peut être fait en tenant compte d'un critère supplémentaire tel que la diminution de la puissance de commande, la moindre sensibilité du dispositif à la température ou une tolérance importante aux paramètres de fabrication.

Les courbes A' et B' représentent les meilleurs choix de $\alpha$, $\beta$, qui annulent l'ordre 5 tout en préservant une profondeur de modulation de l'ordre de 100 %. Selon des applications envisagées, le meilleur choix de paramètres $\alpha$ et $\beta$ sera compris entre les deux limites annulant l'ordre 3 et l'ordre 5. Cela définit une plage de choix possible représentée par les zones hachurées comprises entre les deux courbes respectivement A et A' et B et B'.

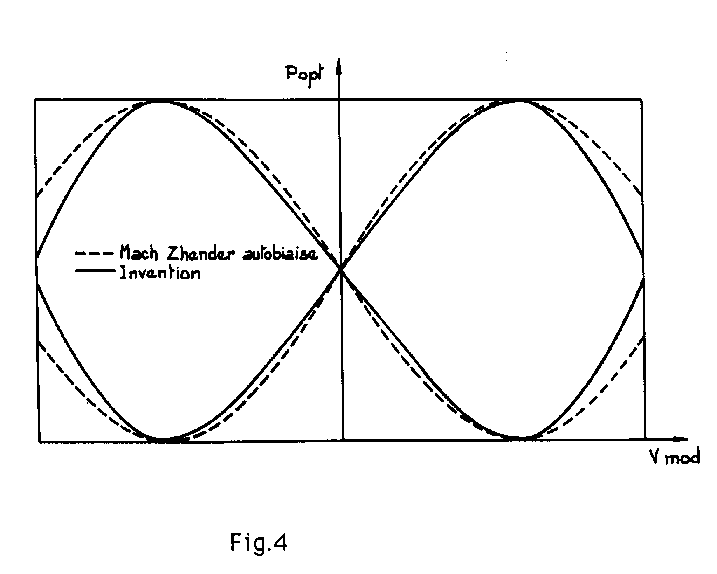

La figure 4 représente la réponse électrooptique, c'est-à-dire la puissance optique délivrée sur les sorties ($P_R$) et ($P_S$) en fonction de la tension de commande V appliquée aux électrodes, comparée à la réponse électrooptique d'un dispositif de type Mach Zhender autobiaisé. On constate une amélioration sensible de la linéarité de la réponse. La figure 4 a été tracée pour le cas particulier où :

$$Y = 0,6$$
$$\alpha = 0,53$$
$$\beta = 1,3044.$$

Le paramètre Y est fixé par le rapport $\frac{L_2}{l_{c2}}$ de la troisième zone, c'est-à-dire par la longueur de cette zone et l'écartement entre les deux guides. Le paramètre $Y' = \beta Y$ peut être obtenu par construction soit :

- en utilisant le même écartement $G_2$ entre les guides de la deuxième zone de modulation (5) que l'écartement $G_1$ prévu entre les guides (110, 111) de la première section de couplage (3). Dans ce cas, $l_{c4} = l_{c2}$ et le choix d'une valeur $\beta$ est donné par le choix d'une longueur $L_4 = \beta L_2$.
- Si l'écartement $G_1$ est différent de l'écartement $G_2$, il est possible de fixer le paramètre $\beta$ indépendamment de la longueur $L_4$.

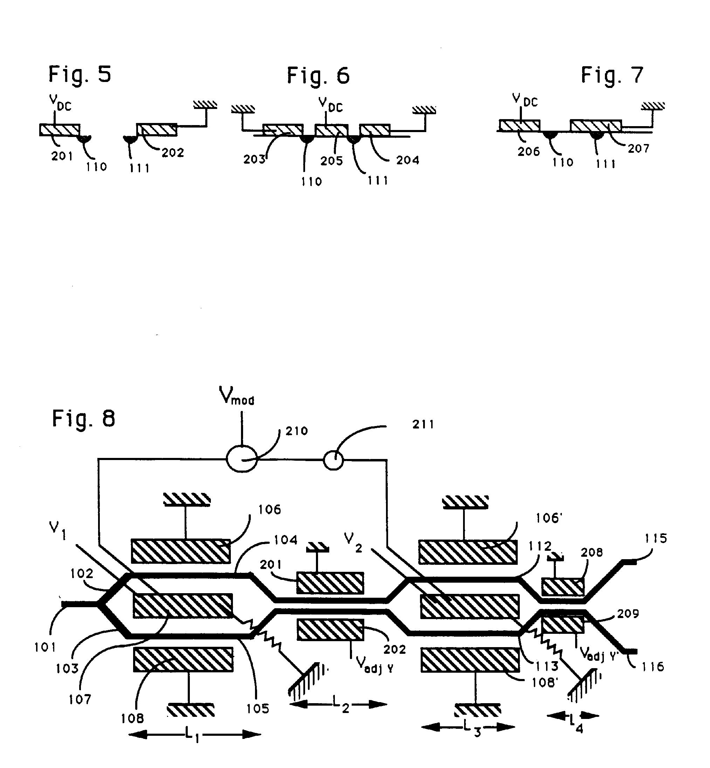

Il est également possible d'ajuster électriquement les paramètres Y et $Y' = \beta Y$ afin de corriger le point de fonctionnement fixé par construction. Ceci permet d'augmenter les tolérances de fabrication et de corriger d'éventuelles fluctuations de ces paramètres. Cette correction peut être effectuée en appliquant une tension continue d'ajustement, soit sur la section (3) afin d'ajuster la valeur de Y, soit sur la section (5), afin d'ajuster le paramètre Y', soit encore sur les deux sections, afin d'ajuster indépendamment les valeurs de Y et de Y'. L'ajustement peut se faire en utilisant trois types de structures d'électrodes représentés respectivement par les figures 5 à 7.

La figure 5 décrit une structure à deux électrodes placées symétriquement par rapport aux guides (110, 111). Les électrodes (201, 202) permettent d'applique une tension continue $V_{DC}$.

La figure 6 décrit une structure à trois électrodes, les deux électrodes extérieures (203, 204) étant reliées à la masse et l'électrode centrale (205) étant reliée à une source de tension $V_{DC}$. L'électrode centrale (205) est disposée entre les deux guides (110, 111).

Une troisième possibilité de structure est représentée en figure 7, elle comporte deux électrodes (206, 207) décalées, l'un des guides d'onde (110) étant placé entre les deux électrodes (206 et 207). L'une des électrodes (206) est reliée à une source de tension $V_{DC}$ alors que l'autre électrode (207) est reliée à la masse.

Ces deux dernières solutions agissent sur la différence de synchronisme du coupleur. Les deux dernières solutions représentées en figures 6 et 7 sont les plus efficaces du point de vue électrooptique. Par contre, elles ont pour inconvénient de débiaiser la zone interférométrique qui précède le coupleur (zone de modulation (2) pour les coupleurs de la section (3), les zone de modulation (4) pour le coupleur en zone de couplage (5)). Ce défaut de biais fait apparaître des distorsions d'ordre pair, sauf si elles sont compensées dans la zone interférométrique, soit par superposition d'un niveau continu au signal de modulation, à l'aide d'un Té de polarisation, soit par l'utilisation d'électrodes de compensation dans la zone interférométrique.

Le paramètre $\alpha$ peut être fixé, soit par construction, soit par ajustage au niveau d'un circuit de commande extérieur au composant.

Pour fixer le paramètre $\alpha$ par construction, il suffit de choisir une longueur $L_3 = \alpha L_1$. De cette façon, les deux zones interférométriques, la zone (2) et la zone (4), peuvent être soumises à des signaux de modulation de même amplitude et soit de signes identiques pour la solution "uniforme", soit de signes opposés pour la solution "alterné".

La figure 8, représente un exemple de réalisation disposant de deux électrodes (201, 202) et (208, 209) pour l'ajustage des paramètres respectivement Y et Y' par des tensions continues $V_{adj}Y$ et $V_{adj}Y'$. Une source de modulation unique $V_{mod}$ alimente les deux zones de modulation (2) et (4) par l'intermédiaire d'un diviseur RF (210) ou d'un coupleur 3dB divisant le signal de modulation en deux signaux de même amplitude.

Un atténuateur (211) placé sur l'une des deux sorties du diviseur (210) permet d'ajuster l'amplitude relative des signaux alimentant les électrodes de chacune des zones de modulation (2), (4).

L'utilisation d'un atténuateur (211) pour ajuster l'amplitude relative des signaux de modulation, permet de déterminer librement les longueurs $L_1$ et $L_3$ des zones de modulation respectivement (2) et (4) et d'optimiser ces longueurs pour d'autres paramètres, par exemple pour améliorer la bande passante.

Bien entendu, toute autre solution électronique permettant d'ajuster l'amplitude des signaux des deux bras est envisageable, par exemple l'emploi de deux amplificateurs à gains différents.

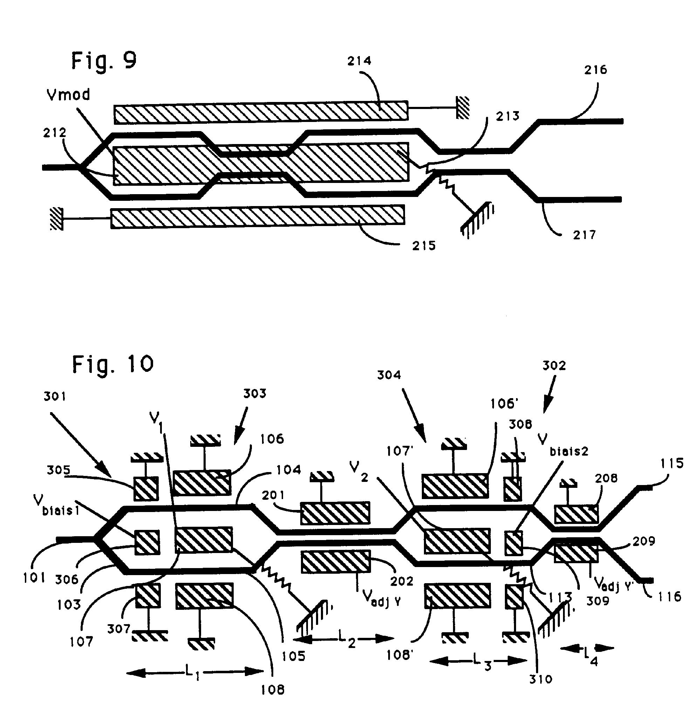

Selon un autre mode de réalisation représenté en figure 9, on utilise une seule électrode (212) modulant les deux zones de modulation (2, 4). On évite ainsi l'utilisation de splitter. L'électrode centrale (212) est reliée d'une part à un générateur de tension de modulation délivrant un signal $V_{mod}$ et d'autre part à la masse par l'intermédiaire d'une résistance (213). Les deux électrodes latérales (214, 215) sont reliées à la masse. Le recouvrement des parties rapprochées des guides optiques (216, 217) est sans conséquence, puisqu'une couche isolante sépare lesdits guides optiques et l'électrode (212). Il s'agit d'un exemple pour lequel le paramètre $\alpha$ est fixé par construction, par la différence des longueurs des zones interférométriques.

Le circuit selon l'invention est par nature autobiaisé. Lorsque le signal de modulation est nul, la moitié de la puissance est disponible dans chacune des deux sorties, et lorsque l'on change le signe de la modulation, le rôle des deux sorties est inversé. Le composant peut toutefois, soit lors d'un défaut de fabrication, soit lors de l'utilisation d'électrodes à trois conducteurs, ou à deux conducteurs décentrés pour ajuster l'un ou l'autre des coupleurs, perdre alors cette propriété. De ce fait, certaines distorsions d'ordre pair ne s'annulent plus et la linéarité du dispositif se dégrade. Pour compenser le défaut de ces modes de réalisation, une première solution consiste à superposer une tension continue au signal de modulation de la zone débiaisée, par l'intermédiaire d'une solution électrique, par exemple à l'aide d'un Té de polarisation. Une autre solution représentée en figure 10, consiste à rajouter une série d'électrodes supplémentaires pour le débiaisage. Dans l'exemple représenté en figure 10, ces deux séries d'électrodes (301, 302) sont constituées chacune par trois électrodes respectivement (305, 306, 307) et (308, 309, 310). Les électrodes extérieures respectivement (305 et 307) et (308 et 310) sont reliées à la masse, alors que les deux électrodes centrales (306, 309) sont reliées à une source électrique délivrant les tensions respectivement $V_{biais1}$ et $V_{biais2}$. Les structures d'électrodes (301) et (302) ont été représentées respectivement avant et après les structures d'électrodes de modulation (303) (106, 107, 108) et (304) (106', 107', 108') auxquelles elles sont associées dans les zones de modulation. En pratique ces structures d'électrodes de débiaisage peuvent être placées indifféremment avant ou après la zone de modulation.

Les exemples de réalisation décrits dans ce qui précède ne sont pas exhaustifs. L'invention pourra faire l'objet de nombreuses variantes en fonction de contraintes et de choix technologiques.

## Revendications

1. Dispositif de modulation électrooptique du type comprenant sur un substrat électrooptique :
   - une première section (1) comprenant une jonction en Y destinée à recevoir le signal optique à moduler et à le diviser en deux parties égales.
   - une première zone de modulation (2) d'une longueur $L_1$ comprenant deux guides optiques (104, 105) parallèles pour recevoir les deux parties du signal optique sortant de la première section, lesdits guides (104, 105) étant suffisamment éloignés pour empêcher le couplage optique entre eux, ladite zone comprenant également trois électrodes (106, 107, 108) s'étendant sur le substrat le long des guides pour appliquer un champ électrique de modulation en fonction d'un signal électrique de modulation d'amplitude $V_1$ appliqué auxdites électrodes (106, 107, 108).
   - une troisième section (3) formant coupleur dans laquelle les guides optiques (110, 111) se prolongent en restant parallèles entre eux sur une longueur $L_2$ et déterminant une

longueur de couplage $l_{c2}$, avec $Y = \dfrac{L_2}{l_{c2}}$.

- une section (6) pour séparer les guides optiques (115, 116) et délivrer deux signaux optiques ($P_R$, $P_S$) modulés de façon complémentaire; ce dispositif étant caractérisé en ce que la troisième section n'est pas soumise à modulation, et qu'il comprend en outre :

- une deuxième zone de modulation (4) d'une longueur $L_3$ comprenant deux guides optiques parallèles (112, 113) pour recevoir les deux parties du signal optique sortant de la troisième section (3), lesdits guides (112, 113) étant suffisamment éloignés pour empêcher le couplage optique entre eux, ladite zone comprenant également trois électrodes (106', 107', 108') s'étendant sur le substrat le long des guides pour appliquer un champ électrique de modulation en fonction d'un signal électrique de modulation d'amplitude $V_2$ appliqué auxdites électrodes; et

- une cinquième section (5) formant coupleur dans laquelle les guides optiques se prolongent en restant parallèles et couplés entre eux sur une longueur $L_4$ en déterminant une longueur de couplage $l_{c4}$, avec $Y' = \dfrac{L_4}{L_{c4}}$, cette cinquième section (5) n'étant pas soumise à modulation.

2. Dispositif de modulation électrooptique selon la revendication 1, caractérisé en ce que l'écartement des deux guides d'onde (110, 111) de la première zone de couplage (3) est identique a l'écartement des deux guides d'onde de la deuxième zone de couplage (4).

3. Dispositif de modulation électrooptique selon la revendication 1, caractérisé en ce que l'une au moins des zones de couplages (3), (5) comprend des électrodes (201, 202, 208, 209) reliées à une source de tension continue, pour l'ajustage les coefficients $Y$ et $Y'$.

4. Dispositif de modulation électrooptique selon l'une des revendications 1 et 3, caractérisé en ce que les signaux de modulation électrique $V_1$ et $V_2$ sont de signes opposés.

5. Dispositif de modulation électrooptique selon la revendication 1, caractérisé en ce que l'une au moins des zones de modulation comprend une série d'électrodes (301, 302) de débiaisage reliées à une source de tension continue.

6. Dispositif de modulation électrooptique selon l'une quelconque des revendications précédentes, caractérisé en ce que, $\alpha$ correspondant au coefficient de proportionnalité entre les tensions appliquées sur les deux zones de modulation, pondéré par le rapport des longueurs desdites zones, soit $\alpha = \dfrac{V_2 L_3}{V_1 L_1}$, la valeur du paramètre $\alpha$ est choisie en fonction de $Y$ dans une plage fixée par deux limites pour lesquelles les distorsions respectivement d'ordre 3 et d'ordre 5 sont annulées.

7. Dispositif de modulation électrooptique selon l'une quelconque des revendications précédentes, caractérisé en ce que $\beta$, correspondant au coefficient de proportionnalité du couplage entre les deux zones de couplage, soit $\beta = \dfrac{Y'}{Y} = \dfrac{L_4}{L_2} \times \dfrac{l_{c2}}{l_{c4}}$, la valeur du paramètre $\beta$ est choisie en fonction de $Y$ dans une plage fixée par deux limites pour lesquelles les distorsions respectivement d'ordre 3 et d'ordre 5 sont annulées,

8. Dispositif de modulation électrooptique selon l'une quelconque des revendications précédentes, caractérisé en ce que les signaux de modulation sont issus d'une même source et sont appliqués aux électrodes de modulation de chacune des zones de modulation (2), (4) via un diviseur (210).

9. Dispositif de modulation électrooptique selon la revendication 8, caractérisé en ce que des moyens d'ajustement de l'amplitude relative des signaux de modulation sont prévus entre les sorties du diviseur et les électrodes de modulation.

10. Dispositif de modulation électrooptique selon la revendication 1, caractérisé en ce qu'il comporte une série unique de trois électrodes (212, 214, 215) s'étendant à la fois sur les deux zones de modulation (2), (4), l'électrode centrale étant séparée des guides de la section (3) formant coupleur qui sépare les deux zones de modulation par une couche isolante.

**Patentansprüche**

1. Elektrooptische Modulationsvorrichtung, die auf einem elektrooptischen Substrat aufweist:
   - einen ersten Abschnitt (1) mit einer Y-förmigen Verzweigung, die das zu modulierende optische Signal empfängt und es in zwei gleiche Teile aufspaltet,

- eine erste Modulationszone (2) einer Länge $L_1$ mit zwei parallelen Lichtleitern (104, 105), die die beiden Teile des aus dem ersten Abschnitt kommenden optischen Signals empfangen und hinreichend weit voneinander entfernt sind, um eine gegenseitige optische Kopplung zu verhindern, wobei diese Zone weiter drei Elektroden (106, 107, 108) aufweist, die sich auf dem Substrat entlang der Lichtleiter erstrecken, um ein elektrisches Modulationsfeld abhängig von einem elektrischen Amplitudenmodulationssignal $V_1$ anzulegen, wenn dieses Signal an die Elektroden (106, 107, 108) angelegt wird,
- einen dritten Abschnitt (3), der einen Koppler bildet und in dem die Lichtleiter (110, 111) parallel zueinander über eine Länge $L_2$ verlaufen, wobei sich eine Kopplungslänge $l_{c2}$ ergibt, derart, daß gilt $Y = L_2/l_{c2}$,
- einen Abschnitt (6), um die beiden Lichtleiter (115, 116) voneinander zu trennen und zwei komplementär modulierte optische Signale ($P_R$, $P_S$) zu liefern dadurch gekennzeichnet, daß der dritte Abschnitt keiner Modulation unterworfen ist und daß die Modulationsvorrichtung weiter aufweist:
- eine zweite Modulationszone (4) einer Länge $L_3$ mit zwei parallelen Lichtleitern (112, 113), die die beiden Teile des aus dem dritten Abschnitt (3) kommenden optischen Signals empfangen und hinreichend weit voneinander entfernt sind, um eine gegenseitige optische Kopplung zu vermeiden, wobei diese Zone weiter drei Elektroden (106', 107', 108') aufweist, die sich auf dem Substrat entlang der Lichtleiter erstrecken und ein elektrisches Modulationsfeld abhängig von einem elektrischen Modulationssignal einer Amplitude $V_2$ anlegen, wenn dieses Signal an die Elektroden angelegt wird, und
- einen fünften Abschnitt (5), der einen Koppler bildet, in dem die Lichtleiter parallel verlaufen und miteinander über eine Länge $L_4$ gekoppelt sind, indem sie eine Kopplungslänge $l_{c4}$ bestimmen, wobei gilt $Y' = L_4/l_{c4}$, wobei dieser fünfte Abschnitt (5) keiner Modulation unterworfen ist.

2. Elektrooptische Modulationsvorrichtung nach Anspruch 1, dadurch gekennzeichnet, daß der Abstand der beiden Lichtleiter (110, 111) der ersten Koppelzone (2) dem Abstand zwischen den beiden Lichtleitern in der zweiten Koppelzone (4) gleicht.

3. Elektrooptische Modulationsvorrichtung nach Anspruch 1, dadurch gekennzeichnet, daß mindestens eine der Koppelzonen (3), (5) Elektroden (201, 202, 208, 209) aufweist, die an eine Gleichspannungsquelle zur Justierung der Koeffizienten Y und Y' angeschlossen sind.

4. Elektrooptische Modulationsvorrichtung nach einem der Ansprüche 1 und 3, dadurch gekennzeichnet, daß die elektrischen Modulationssignale $V_1$ und $V_2$ entgegengesetzte Vorzeichen besitzen.

5. Elektrooptische Modulationsvorrichtung nach Anspruch 1, dadurch gekennzeichnet, daß mindestens eine der Modulationszonen eine Reihe von Elektroden (301, 302) zur Zentrierung aufweist, die an eine Gleichspannungsquelle angeschlossen sind.

6. Elektrooptische Modulationsvorrichtung nach einem beliebigen der vorhergehenden Ansprüche, dadurch gekennzeichnet, daß der Wert des Parameters $\alpha$, der einem Proportionalitätsfaktor zwischen den an die beiden Modulationszonen angelegten Spannungen gewichtet mit dem Verhältnis der Längen dieser Zonen, also $\alpha = V_2 L_3/V_1 L_1$ entspricht, abhängig von Y in einem Bereich gewählt wird, der durch zwei Grenzen bestimmt wird, für die die Verzerrungen der Ordnung 3 bzw. die Verzerrungen der Ordnung 5 zu Null werden.

7. Elektrooptische Modulationsvorrichtung nach einem beliebigen der vorhergehenden Ansprüche, dadurch gekennzeichnet, daß der Wert des Parameters $\beta$, der einem Kopplungs-Proportionalitätsfaktor zwischen den beiden Kopplungszonen, also $\beta = Y'/Y = (L_4/L_2) \cdot (l_{c2}/l_{c4})$ entspricht, abhängig von Y in einem Bereich gewählt wird, der durch zwei Grenzen bestimmt wird, für die die Verzerrungen der Ordnung 3 bzw. die Verzerrungen der Ordnung 5 zu Null werden.

8. Elektrooptische Modulationsvorrichtung nach einem beliebigen der vorhergehenden Ansprüche, dadurch gekennzeichnet, daß die Modulationssignale aus einer gemeinsamen Quelle stammen und an die Modulationselektroden jeder der Modulationszonen (2), (4) über einen Teiler (210) angelegt werden.

9. Elektrooptische Modulationsvorrichtung nach Anspruch 8, dadurch gekennzeichnet, daß Mittel zur Justierung der relativen Amplitude der Modulationssignale zwischen den Ausgängen des Teilers und den Modulationselektroden vorgesehen sind.

**10.** Elektrooptische Modulationsvorrichtung nach Anspruch 1, dadurch gekennzeichnet, daß sie eine gemeinsame Reihe von drei Elektroden (212, 214, 215) aufweist, die sich zugleich über beide Modulationszonen (2), (4) erstrecken, wobei die zentrale Elektrode durch eine Isolationsschicht von den Lichtleitern des Abschnitts (3) getrennt ist, der den Koppelabschnitt bildet und die beiden Modulationszonen voneinander trennt.

## Claims

**1.** Electrooptical modulation device characterized in that it comprises, on an electrooptical substrate:
- a first section (1) comprising a Y junction, intended to receive the optical signal to be modulated and to divide it into two equal parts,
- a second modulation region (2) of length $L_1$ comprising two parallel optical guides (104, 105) for receiving the two parts of the optical signal coming out of the first section, the said guides (104, 105) being spaced sufficiently to prevent optical coupling between them, the said region also comprising three electrodes (106, 107, 108) extending over the substrate along the guides in order to apply a modulation electric field as a function of a modulation electrical signal of amplitude $V_1$ applied to the said electrodes (106, 107, 108),
- a third, coupler-forming section (3) in which the optical guides (110, 111) extend, while remaining mutually parallel over a length $L_2$, and determining a coupling length $l_{c2}$, with

$$Y = \frac{L_2}{l_{c2}},$$

- a section (6) for separating the optical guides (115, 116) and delivering two optical signals $(P_R, P_S)$ modulated in a complementary way; this device being characterized in that the third section is not subjected to modulation, and in that it further comprises:
- a second modulation region (4) of length $L_3$ comprising two parallel optical guide (112, 113) for receiving the two parts of the optical signal coming out of the third section (3), the said guides (112, 113) being spaced sufficiently to prevent optical coupling between them, the said region also comprising three electrodes (106', 107', 108') extending over the substrate along the guides for applying a modulation electric field as a function of a modulation electrical signal of amplitude $V_2$ applied to the said electrodes, and
- a fifth, coupler-forming section (5) in which the optical guides extend, while remaining mutually parallel and coupled over a length $L_4$, and determining a coupling length $l_{c4}$, with $Y' = \frac{L_4}{L_{c4}}$, this fifth section (5) not being subjected to modulation.

**2.** Electrooptical modulation device according to Claim 1, characterized in that the spacing of the two waveguides (110, 111) of the first coupling region (3) is identical to the spacing of the two waveguides of the second coupling region (4).

**3.** Electrooptical modulation device according to Claim 1, characterized in that at least one of the coupling regions (3), (5) comprises electrodes (201, 202, 208, 209) linked to a DC voltage source, for adjusting the Y and Y' coefficients.

**4.** Electrooptical modulation device according to one of Claims 1 and 3, characterized in that the electrical modulation signals $V_1$ and $L_2$ are of opposite signs.

**5.** Electrooptical modulation device according to Claim 1, characterized in that at least one of the modulation regions comprises a series of debiasing electrodes (301, 302) linked to a DC voltage source.

**6.** Electrooptical modulation device according to any one of the preceding claims, characterized in that, $\alpha$ corresponding to the coefficient of proportionality between the voltages applied to the two modulation regions, weighted by the ratio of the lengths of the said regions, i.e. $\alpha = \frac{V_2 L_3}{V_1 L_2}$, the value of the parameter $\alpha$ is chosen as a function of Y in a range fixed by two limits at which the third and fifth order distortions respectively are cancelled.

**7.** Electrooptical modulation device according to any one of the preceding claims, characterized in that, $\beta$ corresponding to the coefficient of proportionality of the coupling between the two coupling regions, i.e. $\beta = \frac{Y'}{Y} = \frac{L_4}{L_2} \times \frac{1_{c2}}{1_{c4}}$, the value of the parameter $\beta$ is chosen as a function of Y in a range fixed by two limits for which the third and fifth order distortions respectively are cancelled.

**8.** Electrooptical modulation device according to any one of the preceding claims, characterized in that the modulation signals are output by the same source and are applied to the modulation electrodes of each of the modulation regions (2), (4) via a divider (210).

9. Electrooptical modulation device according to Claim 8, characterized in that means of adjusting the relative amplitude of the modulation signals are provided between the outputs of the divider and the modulation electrodes.

10. Electrooptical modulation device according to Claim 1, characterized in that it includes a single series of three electrodes (212, 214, 215) extending over both of the two modulation regions (2), (4), the central electrode being separated from the guides of the coupler-forming section (3) which separates the two modulation regions by an isolating layer.

# Fig. 1

Fig.2

Fig.3

Fig.4

Fig. 5

Fig. 6

Fig. 7

Fig. 8

Fig. 9

Fig. 10